# EUROPÄISCHE PATENTSCHRIFT

(11) **EP 1 645 762 B1**
(45) Veröffentlichungstag und Bekanntmachung des Hinweises auf die Patenterteilung: **16.03.2011**
(21) Anmeldenummer: 05021755.3
(22) Anmeldetag: 06.10.2005
(51) Int. Cl.: F16C 29/06, F16C 29/00, F16B 7/04, F16L 21/00, F16L 37/084

(54) **Käfiganordnung aus zwei wälzkörperführenden Käfigen mit einem Verbinder und Lager für eine Längsbewegung mit der Käfiganordnung**
Cage assembly of two rolling element containing retainers with a connector and linear bearing with the cage assembly
Agencement de cage de deux cages de roulements avec un connecteur et palier linéaire avec l'agencement de cage

(30) Priorität: 08.10.2004 DE 102004049069
(43) Veröffentlichungstag der Anmeldung: 12.04.2006
(73) Patentinhaber: AB SKF, 415 03 Göteborg (SE)
(72) Erfinder: Genheimer, Christian, 97422 Schweinfurt (DE); Kemmer, Martin, 97525 Schwebheim (DE); Mayer, Uwe, 97702 Münnerstadt (DE); Stahl, Erwin, 97714 Rottershausen (DE); Velde, Henryk, 97440 Werneck (DE)
(74) Vertreter: Kohl, Thomas

(56) Entgegenhaltungen:
- DE-A1- 3 415 093
- DE-A1- 10 050 615
- DE-A1- 19 601 667
- US-A- 4 005 913
- US-A- 5 015 015
- US-B1- 6 776 167

## Beschreibung

Die Erfindung betrifft eine Käfiganordnung mit einem Verbinder, der zwei hohlzylinderartige, wälzkörperführende Käfige eines Lagers für eine Längsbewegung verbindet, und ein Lager mit der Käfiganordnung.

Beispielsweise aus der DE 197 41 626 A1 ist ein Kugellager für Längsbewegungen mit mehreren, am Umfang verteilten endlosen Kugelreihen bekannt, wobei die Kugelreihen jeweils auf zwei längsverlaufenden Führungsbahnen für die belasteten bzw. unbelasteten Kugeln und diese Führungsbahnen an den Enden paarweise miteinander verbindenden, halbkreisförmigen Umlenkbahnen bestehen.

Aus der US 4,005,913 sind zwei Linearwälzlager bekannt, die axial fluchtend in einem Gehäuse angeordnet sind. Die Linearwälzlager sind dabei mit endlos umlaufenden Kugeln als Wälzkörper ausgebildet. Zwischen den beiden Linerwälzlagern ist weiterhin ein hohlzylinderartiger Schmierölspeicher vorgesehen.

Eine Aufgabe der Erfindung ist es, für ein Lager für eine Längsbewegung eine Verbesserung zu schaffen, so dass unterschiedliche Längsausdehnungen des Lagers in einfacher und kostengünstiger Weise realisierbar sind.

Die Aufgabe wird durch den Gegenstand des Anspruchs 1 gelöst. Vorteilhafte Ausgestaltungen sind in den Unteransprüchen beschrieben.

Gemäß Anspruch 1 ist eine Käfiganordnung mit einem Verbinder, der zwei hohlzylinderartige, wälzkörperführende Käfige eines Lagers für eine Längsbewegung verbindet, derart gestaltet, dass der Verbinder die Käfige fluchtend und gegeneinander verschiebefest verbindet, wobei wenigstens einer der Käfige zum Aufnehmen wenigstens einer endlos umlaufenden Wälzkörperreihe ausgebildet ist.

Mit einem oder mehreren vorgenannter Verbinder lassen sich somit zwei oder mehrere, in vorteilhafter Weise immer gleich ausgebildete Käfige zu einem Lager vorgebbarer Längsausdehnung zusammensetzen. Durch die Verwendung der immer gleich ausgebildeten Käfige ergibt sich ein entsprechender Kostenvorteil, da eine Anpassung eines Käfigs an die vorgegebene Längsausdehnung des Lagers nicht erforderlich ist. Weiterhin sind die Verbinder und die Käfige durch ein einfaches An- bzw. Ineinanderstecken einfach und kostengünstig montierbar.

In einer vorteilhaften Ausgestaltung ist der Verbinder derart gestaltet, dass das Verbinden ausschließlich mit einer vorgebbaren Anzahl von Verdrehpositionen der Käfige zueinander möglich ist. Dadurch kann insbesondere sichergestellt werden, dass beispielsweise zum Führen einer Drehmomentwelle, bei der die belasteten Wälzkörper des Lagers in entsprechenden längsverlaufenden Nuten der Drehmomentwelle mit geführt sind, die belasteten Wälzkörper der miteinander verbundenen Käfige entsprechend gemeinsamer, längsverlaufender Geraden angeordnet sind. Somit ist für den Einsatzfall Drehmomentwelle die richtige Ausrichtung der Wälzkörperlaufbahnen in Reihe konstruktionsbedingt gewährleistet.

In einer weiteren vorteilhaften Ausgestaltung ist der Verbinder zum umschließenden Aufnehmen eines Schmiermittelspeichers zwischen den Käfigen ausgebildet. Dabei ist mit dem sozusagen in den Verbinder integrierbaren Schmierelement mit Vorteil eine Lebensdauerschmierung des Lagers bewerkstelligbar.

Weitere Vorteile, Merkmale und Einzelheiten der Erfindung ergeben sich aus dem nachfolgend beschriebenen Ausführungsbeispiel der Erfindung anhand der Figuren. Dabei zeigen:
- Figur 1: einen Längsschnitt durch eine Wälzlageranordnung für Linearbewegungen,
- Figur 2: eine perspektivische Außenansicht der Wälzlageranordnung der Figur 1,
- Figur 3: einen Längsschnitt durch einen Verbinder der Wälzlageranordnung und
- Figur 4: eine Frontansicht des Verbinders bei Betrachtung des Verbinders in axialer Richtung.

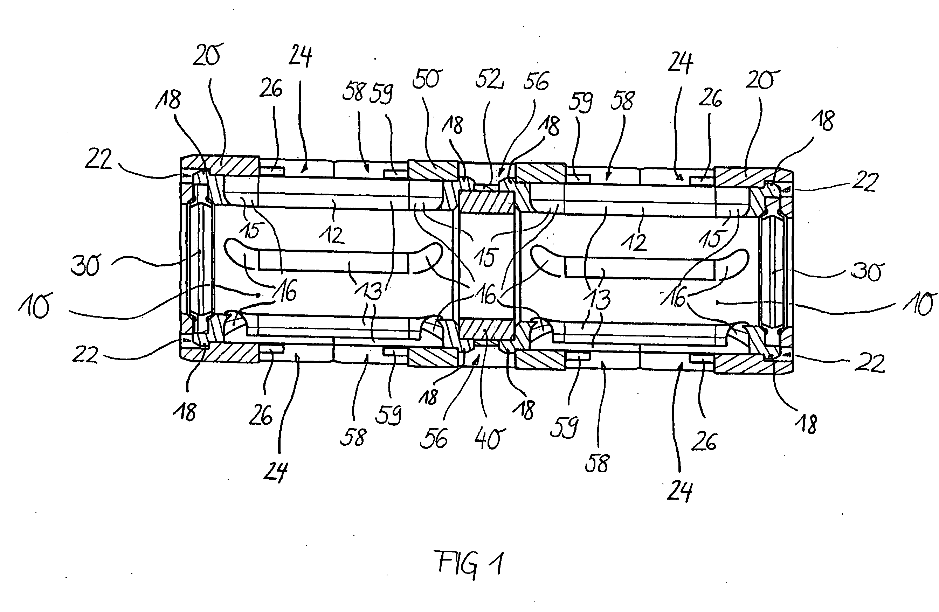

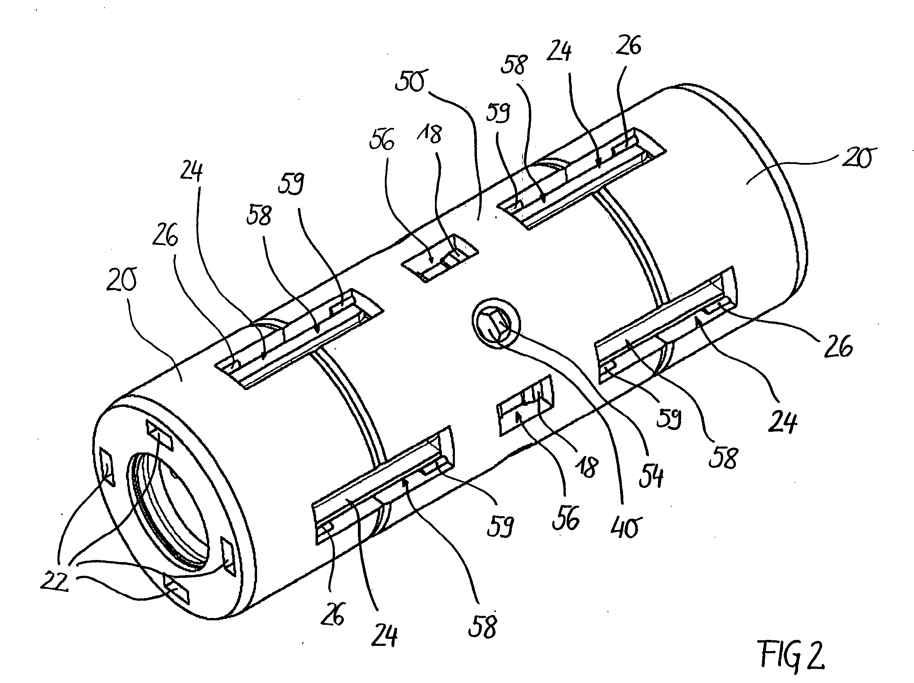

Die Figur 1 zeigt als ein Ausführungsbeispiel der Erfindung einen Längsschnitt durch eine Wälzlageranordnung für Linearbewegungen und die Figur 2 dazu eine perspektivische Außenansicht der Wälzlageranordnung. Dabei umfasst die Wälzlageranordnung folgende, im wesentlichen hohlzylinderartig ausgebildete Elemente: Zwei identisch ausgebildete Käfighülsen 10, zwei identisch ausgebildete Schlussringe 20, zwei identisch ausgebildete Dichtungen 30, einen Schmiermittelspeicher 40 und einen Verbinder 50.

Jede der beiden Käfighülsen 10 ist dabei mehrteilig, umfassend einen Mittelabschnitt 12 und zwei Endkappen 15, ausgebildet. Jede der Käfighülsen 10 umfasst dabei an vier in Umfangsrichtung gleich verteilten Stellen eingeformte Kugelführungen, in denen jeweils eine endlose Reihe von nicht dargestellten Kugeln geführt ist. Jede Kugelführung umfasst dabei im Mittelabschnitt 12 zwei nebeneinander angeordnete, längsverlaufende Führungsbahnen 13 zum Führen der belasteten und unbelasteten Kugeln sowie zwei halbkreisförmig verlaufende Umlenkbahnen 16 in den Endkappen 15, die die längsverlaufenden Führungsbahnen 13 an den Enden miteinander verbinden. In anderen Ausführungen sind beispielsweise mehr oder weniger als die vier Kugelführungen vorgesehen.

Da die Käfighülsen 10 aus einem elastischen Kunststoff im Spritzgießverfahren hergestellt sind, ist für jede Führungsbahn 13 für die belasteten Kugeln von außen her eine nicht dargestellte, lastaufnehmende Laufbahnplatte, beispielsweise aus einem harten Stahl in eine entsprechende Öffnung im Mittelabschnitt 12 einsetzbar.

Über die belasteten Kugeln ist innerhalb der Käfighülsen 10 eine nicht dargestellte Welle, beispielsweise eine Drehmomentwelle längsverschieblich lagerbar, wobei die Drehmomentwelle für die belasteten Kugeln vier in Umfangsrichtung gleich verteilte, längsverlaufende Nuten aufweist, so dass die Drehmomentwelle bezüglich der Käfighülsen 10 verdrehfest geführt ist.

Zwischen den beiden Käfighülsen 10 ist der Schmiermittelspeicher 40 in der Ausbildung als ein ölgetränkter Schaumstoff angeordnet. Dabei ist in Abhängigkeit vom jeweiligen Anwendungsfall eine integrierte Lebensdauerschmierung realisierbar.

An jedem axialen Ende der Wälzlageranordnung ist das jeweilige axiale Ende der Käfighülsen 10 mit dem auf die Käfighülse 10 aufschnappbaren Schlussring 20 abgeschlossen, wobei zwischen der Käfighülse 10 und dem Schlussring 20 die Dichtung 30, beispielsweise aus Polyurethan angeordnet ist. Für besagtes Einschnappen weist jede der Käfighülsen 10 an ihren axialen Enden vier in Umfangsrichtung gleich verteilte, radial nach außen gerichtete Erhebungen 18 auf, die beim Überschieben des Schlussrings 20 über die Käfighülse 10 in entsprechende vier, ebenfalls in Umfangsrichtung gleichverteilte Durchbrüche 22 des Schlussrings 20 einrasten. Damit wird unter anderem sichergestellt, dass sich die Schlussringe 20 nur derart fest mit den Käfighülsen 10 verbinden lassen, dass Aussparungen 24 in den Schlussringen 20 für ein Einsetzen vorgenannter Laufbahnplatten deckungsgleich mit den darunter liegenden Öffnungen der Käfighülsen 10 für die Laufbahnplatten zu liegen kommen. Für das Einschnappen der Laufbahnplatten sind in den Aussparungen 24 der Schlussringe 20 an den beiden Seitenwänden jeder Aussparung 24 sich axial erstreckende, in die Aussparungen 24 hineinragende, auf einen axialen Endabschnitt der Laufbahnplatten wirkende Erhebungen 26 halbkreisförmigen Querschnitts vorgesehen. In anderen Ausführungen werden natürlich auch Erhebungen mit anderen als halbkreisförmigen Querschnitten eingesetzt.

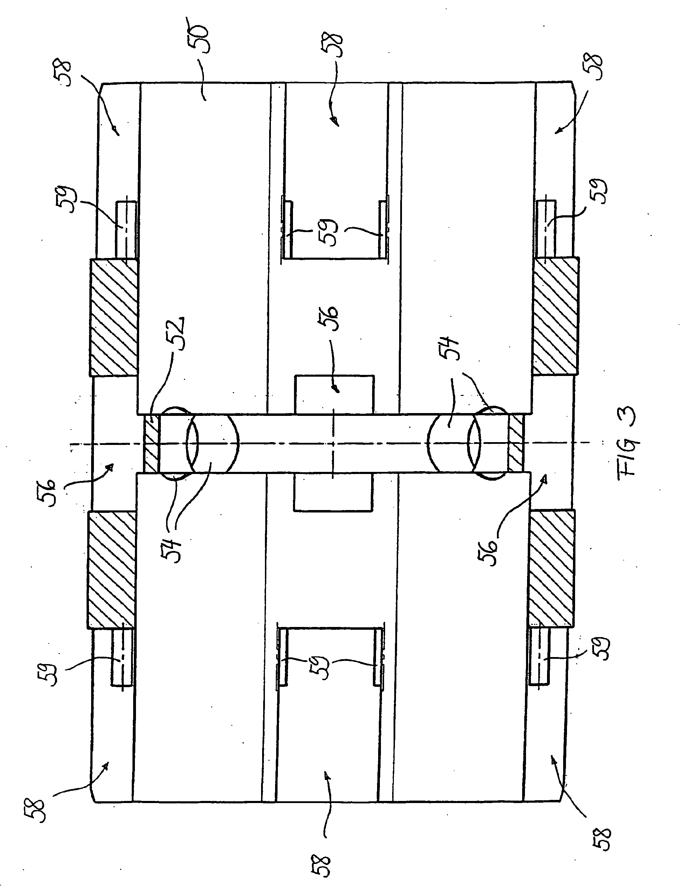

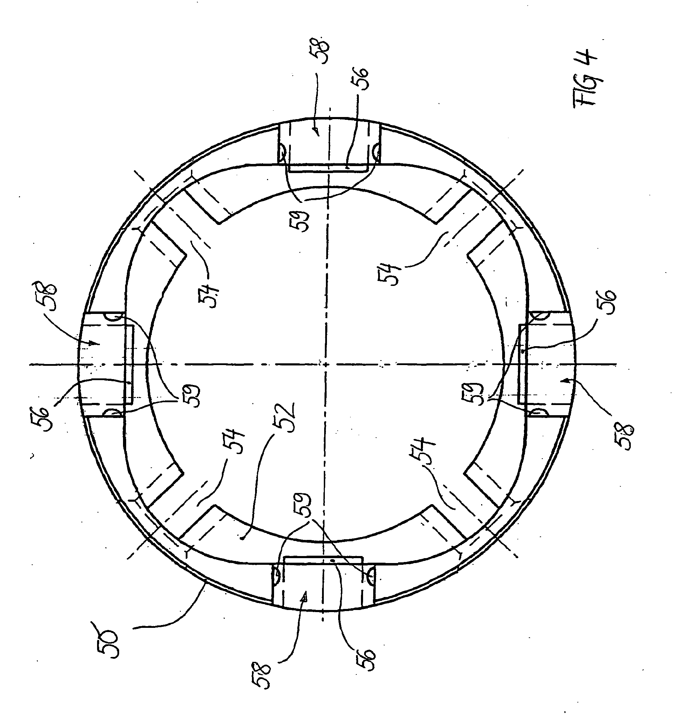

In der axialen Mitte der Wälzlageranordnung sind die beiden Käfighülsen 10 über den Verbinder 50 miteinander verbunden. Dazu zeigt die Figur 3 einen Längsschnitt durch den Verbinder 50 und die Figur 4 eine Frontansicht des Verbinders 50 bei Betrachtung des Verbinders 50 in axialer Richtung. Dabei ähnelt jede der beiden axialen Hälften des Verbinders 50 den Schlussringen 20, wobei aber insbesondere im Mittenbereich der Verbinder 50 abweichend von einem bloßen Aneinandersetzen zweier Schlussringe 20 ausgebildet ist.

Dabei umfasst der Verbinder 50 in seiner axialen Mitte einen ringartigen Mittenbereich 52, der sich radial weiter nach innen erstreckt als die übrigen Bereiche des Verbinders 50, wobei sich der ringartige Mittenbereich 52 aber nur derart weit nach innen erstreckt, dass noch der Schmiermittelspeicher 40 aufnehmbar ist. Weiterhin umfasst der Verbinder 50 in dem ringartigen Mittenbereich 52 vier den Verbinder 50 radial durchdringende Bohrungen 54.

Ferner umfasst der ringartige Mittenbereich 52 vier in Umfangsrichtung gleich verteilt angeordnete Durchbrüche 56, in welche die Erhebungen 18 der Endkappen 15 der Käfighülsen 10 einhakbar sind, wobei anders als die Durchbrüche 22 in den Schlussringen 20 die Durchbrüche 56 des Verbinders 50 in radialer Richtung den Verbinder 50 vollständig nach außen hin durchdringend gestaltet sind. Dabei erfüllen die Durchbrüche 56 des Verbinders 50 die gleiche Funktion wie die Durchbrüche 22 der Schlussringe 20. Weiterhin ist dadurch sichergestellt, dass die vier Reihen von belasteten Kugeln der beiden Käfighülsen 10 jeweils entsprechend einer achsparallelen Geraden angeordnet sind, was insbesondere für ein Führen vorgenannter Drehmomentwelle mit Nuten erforderlich ist.

Des weiteren umfasst der Verbinder 50 wie die Schlussringe 20 Aussparungen 58 mit an den Seitenwänden der Aussparungen 58 ausgebildeten Erhebungen 59, die die gleiche Funktion wie die Aussparungen 24 und Erhebungen 26 der Schlussringe 20 erfüllen.

Der Verbinder 50 weist weiterhin beiderseits des ringartigen Mittenbereichs 52 einen Innenmantel mit einem Querschnitt entsprechend eines eckenverrundeten Quadrats auf, so dass ein Aufschieben des Verbinders 50 auf die Käfighülsen 10 derart erleichtert ist, dass beim Aufschieben des Verbinders 50 die mit den Erhebungen 18 versehenen Bereiche der Käfighülsen 10 nach innen gedrückt werden und sich durch das Verdrücken hervorgerufene Verformungen der Endkappen 15 der Käfighülsen 10 in die abgerundeten Eckenbereiche des Verbinders 50 hinein ausdehnen können. Gleichzeitig bildet dabei der ringartige Mittenbereich 52 sozusagen eine Anschlagsfläche für die Käfighülsen 10.

### Bezugszeichenliste

- 10: Käfighülse
- 12: Mittelabschnitt
- 13: Führungsbahn
- 15: Endkappe
- 16: Umlenkbahn
- 18: Erhebung

- 20: Schlussring
- 22: Durchbruch
- 24: Aussparung
- 26: Erhebung

- 30: Dichtung
- 40: Schmiermittelspeicher

- 50: Verbinder
- 52: ringartiger Mittenbereich
- 54: Bohrung
- 56: Durchbruch
- 58: Aussparung
- 59: Erhebung

## Patentansprüche

1. Käfiganordnung auszwei hohlzylinderartigen, wälzkörperfüihrendn Käfigen (10) eines Lagers für eine Längsbewegung, die durch einen separaten Verbinder (50) miteinander verbunden sind, wobei der Verbinder (50) derart gestaltet ist, dass die Käfige (10) fluchtend und gegeneinander verschiebefest verbindet, und wobei wenigstens einer der Käfige (10) zum Aufnehmen wenigstens einer endlos umlaufenden Wälzkörperreihe ausgebildet ist.

2. Käfiganordnung nach Anspruch 1, wobei der Verbinder (50) derart gestaltet ist, dass der Verbinder (50) ein gegeneinander gerichtetes Verdrehen der Käfige (10) um deren Hauptachse verhindert.

3. Käfiganordnung nach einem der Ansprüche 1 oder 2, wobei der Verbinder (50) derart gestaltet ist, dass das Verbinden ausschließlich mit einer vorgebbaren Anzahl von Verdrehpositionen der Käfige (10) zueinander möglich ist.

4. Käfiganordnung nach Anspruch 3, wobei die vorgebbaren Verdrehpositionen der Käfige (10) zueinander derart gewählt sind, dass die linearen Laufbahnabschnitte der bestimmungsgemäß belasteten Wälzkörper beider Käfige (10) in axialer Richtung fluchten.

5. Käfiganordnung nach einem der Ansprüche 1 bis 4, wobei der Verbinder (50) und die Käfige (10) derart ausgestaltet sind, dass sie einschnappbar miteinander verbindbar sind.

6. Käfiganordnung nach Anspruch 5, wobei der Verbinder (50) für das Einschnappen in einem Mittenbereich in Umfangsrichtung verteilt angeordnete Durchbrüche (56) aufweist, in die entsprechend ausgebildete, sich radial nach außen hin erstreckende, in Umfangsrichtung verteilte Erhebungen (18) an den Käfigen (10) zum Eingreifen vorgesehen sind.

7. Käfiganordnung nach Anspruch 6, wobei vier in Umfangsrichtung gleichverteilte Durchbrüche (56) und Erhebungen (18) vorgesehen sind.

8. Käfiganordnung nach einem der Ansprüche 1 bis 7, wobei der Verbinder (50) für ein lösbares Verbinden der Käfige (10) miteinander ausgebildet ist.

9. Käfiganordnung nach einem der Ansprüche 1 bis 8, wobei der Verbinder (50) einstückig ausgebildet ist.

10. Käfiganordnung nach einem der Ansprüche 1 bis 9, wobei der Verbinder (50) einen Mittenbereich (52), der sich beim Verbinden wenigstens teilweise zwischen den beiden Käfigen (10) erstreckt, und zwei sich an den Mittenbereich (52) anschließende Randbereiche umfasst, die beim Verbinden einen Teil der Außenmäntel der Käfige (10) im Wesentlichen umschließen.

11. Käfiganordnung nach Anspruch 10, wobei der Mittenbereich (52) den Verbinder (50) radial durchdringende, in Umfangsrichtung verteilte Bohrungen (54) umfasst.

12. Käfiganordnung nach einem der Ansprüche 1 bis 11, wobei der Verbinder (50) je Käfig (10) mit dem Käfig (10) übereinstimmende Aussparungen (58) auf weist, in die für axiale Führungsabschnitte der bestimmungsgemäß belasteten Wälzkörper je ein lastaufnehmendes Laufbahnelement einsetzbar ist.

13. Käfiganordnung nach Anspruch 11 oder 12, wobei vier in Umfangsrichtung gleichverteilte Bohrungen (54) und/oder Aussparungen (58) vorgesehen sind.

14. Käfiganordnung nach einem der Ansprüche 1 bis 13; wobei der Verbinder (50) und/oder die Käfige (10) aus einem Kunststoff, insbesondere Polyacetal, ausgebildet sind.

15. Käfiganordnung nach einem der Ansprüche 1 bis 14, wobei der Verbinder (50) zum umschließenden Aufnehmen eines Schmiermittelspeichers (40) zwischen den Käfigen (10) ausgebildet ist.

16. Käfiganordnung nach Anspruch 15, wobei der Schmiermittelspeicher (40) aus einem mit einem Öl tränkbaren Schaumstoff ausgebildet ist.

17. Käfiganordnung nach einem der Ansprüche 1 bis 16 wobei der Verbinder (50), die Käfige (10) und/oder der Schmiermittelspeicher (40) im Wesentlichen kreisringartige Querschnitte aufweisen.

18. Käfiganordnung nach einem der Ansprüche 1 bis 17, wobei die Wälzkörper als Kugeln ausgebildet sind.

19. Lager für eine Längsbewegung mit einer Käfiganordnung nach einem der Ansprüche 1 bis 18.

20. Lager nach Anspruch 19, wobei das Laufbahnelement länglich ausgebildet ist.

21. Lager nach einem der Ansprüche 19 oder 20, wobei das Laufbahnelement aus einem Material größerer Härte als die Käfige (10), insbesondere einem Stahl, ausgebildet ist.

## Claims

1. Cage arrangement composed of two hollow-cylinder-like rolling-body-guiding cages (10) of a bearing for longitudinal movement, which are connected to one another by means of a separate connector (50), the connector (50) being configured in such a way that it connects the cages (10) in alignment and fixedly in terms of displacement with respect to one another, and at least one of the cages (10) being designed for receiving at least one endlessly revolving rolling-body row.

2. Cage arrangement according to Claim 1, the connector (50) being configured in such a way that the connector (50) prevents the cages (10) from being rotated with respect to one another about their main axis.

3. Cage arrangement according to either one of Claims 1 and 2, the connector (50) being configured in such a way that connection is possible solely with a predeterminable number of rotary positions of the cages (10) with respect to one another.

4. Cage arrangement according to Claim 3, the predeterminable rotary positions of the cages (10) with respect to one another being selected in such a way that the linear raceway portions of the rolling bodies, loaded as intended, of the two cages (10) are in alignment in the axial direction.

5. Cage arrangement according to one of Claims 1 to 4, the connector (50) and the cages (10) being configured in such a way that they can be connected to one another by being snapped in.

6. Cage arrangement according to Claim 5, the connector (50) having, for snapping-in, perforations (56) which are arranged in a middle region so as to be distributed in a circumferential direction and into which correspondingly designed elevations (18) on the cages (10) are intended to engage, the said elevations extending radially outwards and being distributed in the circumferential direction.

7. Cage arrangement according to Claim 6, four perforations (56) and elevations (18) equally distributed in the circumferential direction being provided.

8. Cage arrangement according to one of Claims 1 to 7, the connector (50) being designed for releasable connection of the cages (10) to one another.

9. Cage arrangement according to one of Claims 1 to 8, the connector (50) being formed in one piece.

10. Cage arrangement according to one of Claims 1 to 9, the connector (50) comprising a middle region (52), which, during connection, extends at least partially between the two cages (10), and two marginal regions, which adjoin the middle region (52) and, during connection, essentially surround part of the outer casings of the cages (10).

11. Cage arrangement according to Claim 10, the middle region (52) comprising bores (54) which penetrate radially through the connector (50) and are distributed in the circumferential direction.

12. Cage arrangement according to one of Claims 1 to 11, the connector (50) having per cage (10) clearances (58) which match the cage (10) and into which in each case a load-absorbing raceway element can be inserted for axial guide portions of the rolling bodies loaded as intended.

13. Cage arrangement according to Claim 11 or 12, four bores (54) and/or clearances (58) equally distributed in the circumferential direction being provided.

14. Cage arrangement according to one of Claims 1 to 13, the connector (50) and/or the cages (10) being formed from a plastic, in particular polyacetal.

15. Cage arrangement according to one of Claims 1 to 14, the connector (50) being designed for surroundingly receiving a lubricant store (40) between the cages (10).

16. Cage arrangement according to Claim 15, the lubricant store (40) being formed from a foam impregnatable with oil.

17. Cage arrangement according to one of Claims 1 to 16, the connector (50), the cages (10) and/or the lubricant store (40) having essentially annular cross sections.

18. Cage arrangement according to one of Claims 1 to 17, the rolling bodies being designed as balls.

19. Bearing for longitudinal movement with a cage arrangement according to one of Claims 1 to 18.

20. Bearing according to Claim 19, the raceway element being of elongate design.

21. Bearing according to either one of Claims 19 and 20, the raceway element being formed from a material of greater hardness than the cages (10), in particular a steel.

## Revendications

1. Agencement de cages constitué de deux cages (10) guidant des corps de roulement, de forme cylindrique creuse, d'un palier pour un mouvement longitudinal, qui sont connectées l'une à l'autre par un connecteur séparé (50), le connecteur (50) étant configuré de telle sorte qu'il connecte les cages (10) en affleurement et de manière solidaire en translation l'une par rapport à l'autre, au moins l'une des cages (10) étant réalisée pour recevoir au moins une rangée de corps de roulement tournant sans fin.

2. Agencement de cages selon la revendication 1, dans lequel le connecteur (50) est configuré de telle sorte que le connecteur (50) empêche une rotation en sens inverse des cages (10) autour de leur axe principal.

3. Agencement de cages selon l'une quelconque des revendications 1 ou 2, dans lequel le connecteur (50) est configuré de telle sorte que la connexion soit possible exclusivement avec un nombre prédéfinissable de positions de rotation des cages (10) l'une par rapport à l'autre.

4. Agencement de cages selon la revendication 3, dans lequel les positions de rotation prédéfinissables des cages (10) l'une par rapport à l'autre sont choisies de telle sorte que les portions de piste de roulement linéaires des corps de roulement sollicités de manière conforme aux prescriptions des deux cages (10) soient en affleurement dans la direction axiale.

5. Agencement de cages selon l'une quelconque des revendications 1 à 4, dans lequel le connecteur (50) et les cages (10) sont configurés de telle sorte qu'ils puissent être connectés les uns aux autres par encliquetage.

6. Agencement de cages selon la revendication 5, dans lequel le connecteur (50) présente, pour l'encliquetage, des orifices (56) disposés de manière répartie dans la direction périphérique dans une région centrale, dans lesquels sont prévus des rehaussements (18) répartis dans la direction périphérique, s'étendant radialement vers l'extérieur et réalisés de manière correspondante, sur les cages (10) en vue de l'engagement.

7. Agencement de cages selon la revendication 6, dans lequel quatre orifices (56) et rehaussements (18) répartis uniformément dans la direction périphérique sont prévus.

8. Agencement de cages selon l'une quelconque des revendications 1 à 7, dans lequel le connecteur (50) est réalisé pour une connexion desserrable des cages (10) l'une à l'autre.

9. Agencement de cages selon l'une quelconque des revendications 1 à 8, dans lequel le connecteur (50) est réalisé d'une seule pièce.

10. Agencement de cages selon l'une quelconque des revendications 1 à 9, dans lequel le connecteur (50) comprend une région centrale (52), qui s'étend lors de la connexion au moins en partie entre les deux cages (10), et deux régions de bord se raccordant à la région centrale (52), qui, lors de la connexion, entourent essentiellement une partie de l'enveloppe extérieure des cages (10).

11. Agencement de cages selon la revendication 10, dans lequel la région centrale (52) comprend des alésages (54) répartis dans la direction périphérique, traversant radialement le connecteur (50).

12. Agencement de cages selon l'une quelconque des revendications 1 à 11, dans lequel le connecteur (50) présente, pour chaque cage (10), des évidements (58) coïncidant avec la cage (10), dans lesquels peut à chaque fois être inséré un élément de piste de roulement recevant la charge pour des portions de guidage axiales des corps de roulement sollictés de manière conforme aux prescriptions.

13. Agencement de cages selon la revendication 11 ou 12, dans lequel quatre alésages (54) et/ou évidements (58) répartis uniformément dans la direction périphérique sont prévus.

14. Agencement de cages selon l'une quelconque des revendications 1 à 13, dans lequel le connecteur (50) et/ou les cages (10) sont réalisés en plastique, notamment en polyacétal.

15. Agencement de cages selon l'une quelconque des revendications 1 à 14, dans lequel le connecteur (50) est réalisé entre les cages (10) pour recevoir par enveloppement un dispositif de stockage de lubrifiant (40).

16. Agencement de cages selon la revendication 15, dans lequel le dispositif de stockage de lubrifiant (40) est réalisé en mousse pouvant être imprégnée d'huile.

17. Agencement de cages selon l'une quelconque des revendications 1 à 16, dans lequel le connecteur (50), les cages (10) et/ou le dispositif de stockage de lubrifiant (40) présente(nt) des sections transversales essentiellement annulaires circulaires.

18. Agencement de cages selon l'une quelconque des revendications 1 à 17, dans lequel les corps de roulement sont réalisés sous forme de billes.

19. Palier pour un mouvement longitudinal comprenant un agencement de cages selon l'une quelconque des revendications 1 à 18.

20. Palier selon la revendication 19, dans lequel l'élément de piste de roulement est réalisé sous forme oblongue.

21. Palier selon l'une quelconque des revendications 19 ou 20, dans lequel l'élément de piste de roulement se compose d'un matériau de plus grande dureté que les cages (10), notamment d'acier.
